# EUROPEAN PATENT SPECIFICATION

(11) **EP 2 485 577 B1**
(45) Date of publication and mention of the grant of the patent: **03.07.2013**
(21) Application number: 10779847.2
(22) Date of filing: 08.10.2010
(51) Int. Cl.: A01F 29/10, A01D 43/10, A01D 82/02

(54) **COMPRESSION ROLL HOUSING**
KOMPRESSIONSWALZENGEHÄUSE
LOGEMENT DE ROULEAU DE COMPRESSION

(30) Priority: 09.10.2009 GB 0917733
(43) Date of publication of application: 15.08.2012
(73) Proprietor: AGCO GmbH, 87616 Marktoberdorf (DE)
(72) Inventor: DREER, Constantin, 89257 Illertissen (DE)
(74) Representative: White, Andrew Gordon
(86) International application number: PCT/IB2010/002551
(87) International publication number: WO 2011/042802

(56) References cited:
- EP-A1- 0 541 975
- DE-A1- 2 149 974
- GB-A- 2 142 693
- JP-A- 11 167 426
- US-A- 2 126 072
- US-A- 5 976 012
- US-B1- 6 786 110

## Description

This invention relates to a roll housing on an agricultural machine. More specifically, it relates to a compression roll housing on a harvesting machine, for example, a forage harvester.

A forage harvester has a front attachment which includes a front cutter and a mechanism for feeding the cut crop to compression rolls where it is compressed. The compressed crop is then cut by cutters before being fed into a discharge chute.

The compression rolls which comprise a drum and a shaft are contained within a compression roll housing. Typically, three sets of rollers are arranged in pairs, each set having an upper and lower roller so that the crop is fed and compressed between each set. The housing comprises apertures so that the rolls can be mounted within the housing with the shafts protruding through the apertures. The rollers must be mounted so that the distance between the upper and lower rolls can be altered in order to facilitate cleaning and repairs and to allow the compression thickness to be altered. Typically, the shafts of the upper set of rollers are mounted within longitudinal apertures which extend generally vertically on the sides of the housing. This means that when the shaft is secured at a desired height within an aperture, there is at least one portion of the aperture which is not filled by the shaft though which harvested material in the housing may escape which in turn reduces the yield of compressed, cut crop and can cause damage/blocking to other parts of the machine.

EP 0541 975 B1 discloses the use of sliders to seal, or cover roll housing apertures. The sliders are mounted within guides provided on the housing and are pivotally connected so that the sliders are vertically moveable over the aperture when there is movement of the shaft within the aperture.

As mentioned in EP 0 541 975 B1 sliders tend to cant which restricts movement. EP 0 541 975 B1 tries to overcome this problem by fitting the sliders into guides to avoid canting. Even if canting during movement is avoided by reducing the slackness between the guides and sliders, the uncovered guides are likely to be soiled by dust or crop from the housing which may restrict movement of the sliders. In addition the design shown in EP 0 541 975 B1 requires a precise multi part design which is expensive. An alternative means for sealing a slot is the use of bristles extending from one side of a slot toward the other, as described in US 6,786,110 B1.

The object of this invention is to provide an alternative sealing means for sealing a roll housing aperture to prevent crop escaping from the housing whilst permitting movement of the roll shaft within the aperture.

According to the invention, there is provided a compression roll housing for an agricultural machine wherein said housing has a side panel provided with at least one elongated aperture for receiving a shaft of a compression roll, said aperture allowing movement of the shaft within the aperture along its longitudinal axis, wherein the at least one elongated aperture is provided with fibrous strands to prevent the escape of any material from the housing, characterised in that said housing further comprises a removable protection plate provided with at least one further elongated aperture, wherein the at least one further aperture is provided with fibrous strands.

The fibrous strands are flexible and can be densely packed allowing a good seal to be formed across the aperture in regions of the aperture both above and below the shaft, and in particular in the region around the shaft. Moreover, the fibrous strands do not hinder the movement of the shaft within the aperture.

Preferably, the fibrous strands extend across the aperture transverse to the longitudinal axis. More preferably, two opposing sides of the aperture are provided with fibrous strands which extend across the aperture and meet along the longitudinal axis. In this way the shaft can move along the longitudinal axis where the strands provide the path of least resistance to movement.

In some roll housings, removable protection plates are provided on the inside of the housing to protect the housing against wear and tear from the crop being thrashed against the walls of the housing.

Preferably, the elongated aperture of the housing side panel and the further elongated aperture of the protection plate are aligned to form a single elongated aperture sealed by fibrous strands.

In this respect the aperture in which the shaft may be moved is partly provided by the housing and partly by the protection plate. Preferably, only a lower portion of the at least one further elongated aperture is provided with fibrous strands. The remainder of the protection plate and further elongated aperture reinforce the apertures of the housing.

The fibrous strands may be bristles, or brushes.

The invention will now be described by example only with reference to the following drawings, in which:
Figure 1 is a perspective view of a roll housing in accordance with the invention fitted with protection plates, and
Figure 2 is a perspective view of the roll housing of figure 1 in which the protection plates have been removed and are shown in figures 2a and 2b.

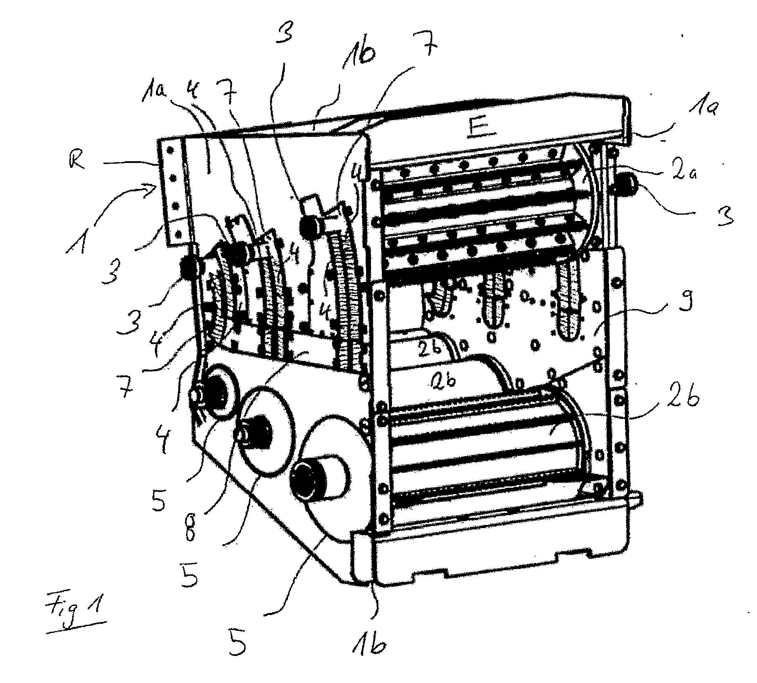

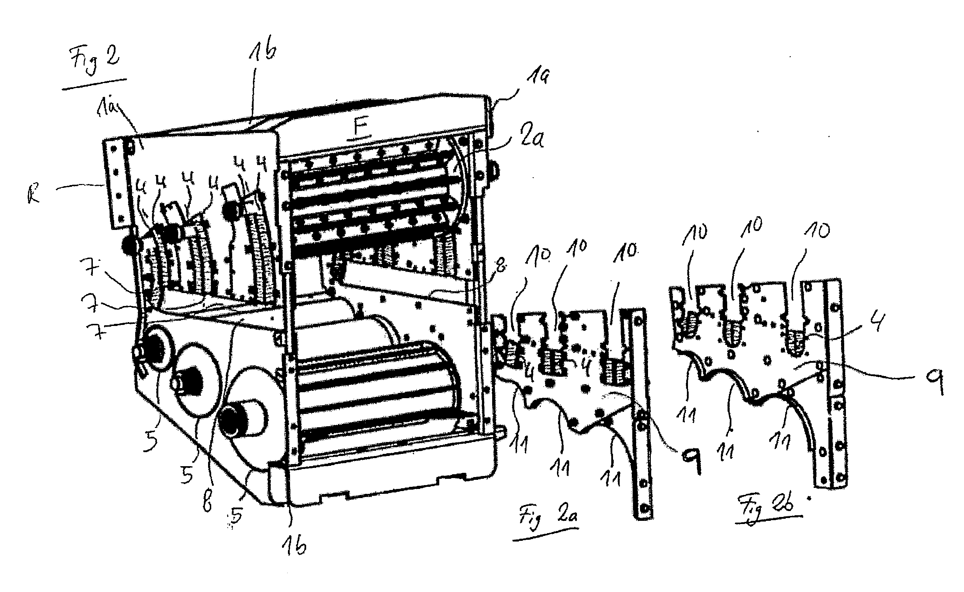

Figures 1 and 2 are perspective views of a compression roll housing 1 for use in an agricultural machine, for example, a forage harvester. The views show the housing 1 as looking into the housing from the front of the housing towards the rear. The housing 1 is attached to the forage harvester (not shown) by upper and lower links (not shown). A front attachment (not shown) is attached to the front of the housing which comprises a front cutter for cutting the crop from the stem and a mechanism for feeding the cut crop to the compression roll housing 1. The rear of the housing is attached to a rear part of machine which houses a knife drum. Once the crop has been compressed in the compression roll housing it is fed to the knife drum where it is cut into predetermined crop elements.

The housing 1 comprises two opposing side panels 1 a and an upper and lower panel 1 b. The front end F of the housing 1 is open and connected to a front attachment so that harvested material can be fed from the cutter into the compression roll housing. The rear end R of the housing is open for attachment to a further part of the machine where the compressed crop is cut. The housing 1 houses three pairs of compression rolls. Each pair has an upper roll 2a and a lower roll 2b. The compression rolls 2a, 2b comprise a compression drum mounted on a shaft 3. Each of the side panels 1 a has three elongated apertures 7 for receiving the shafts 3 of the upper rolls 2a and three, rounded apertures 5 for receiving the shafts 3 and drum of the lower rolls 2b. The elongated apertures 7 are substantially vertical and gently curved. Each of the side panels 1 a of the housing is also provided with a horizontal aperture 8 which extends across the housing 1 under the elongated apertures 7. The horizontal apertures 8 enable the upper rolls 2a to be assembled through the front end of the housing which is desirable for assembly reasons and is the subject of the applicant's co-pending application No. GB 2474291

In figure 1 two vertical protection plates 9 are fitted to the inside of the housing 1 to the two opposing vertical side panels 1a. One of the protection plates 9 can be viewed though the horizontal aperture 8 in the housing 1 in figure 1. The form of the plates can be best seen in figures 2a and 2b where they are removed from the housing.

The plates 9 shown in figures 2a and 2b comprise three elongated apertures 10 and three arches 11 which correspond to the elongated apertures 7 and lower rolls 2b. When fitted to the housing 1, the plates 9 cover the horizontal apertures 8 and further define the elongated apertures 7. The plates 9 reinforce the side panels 1a of the housing, especially around the elongated apertures 7 and protect the inside of the housing 1 from damage from the crop. The protection plates 9 are simple to re-place when worn.

The elongated apertures 7 allow the shafts 3 of each of the upper rolls 2a to be raised or lowered within the housing. The elongated apertures 7, 10 are provided with fibrous strands 4 such as, bristles or brushes to seal the aperture to prevent any harvested material in the housing from escaping through the apertures. Typically, the fibrous strands comprise a nylon material. The fibrous strands, being flexible allow movement of the shafts 3 within the apertures 7 whilst providing a good seal across the apertures and around the shafts which can be problematic owing to the shapes of the shafts. The fibrous strands 4 are attached to both sides of the apertures 7, 10 and extend horizontally to the longitudinal axis of the apertures 7, 10 indicated by a dotted line. Apertures 7 are provided with fibrous strands along the length of each aperture, whereas apertures 10 are only provided with fibrous strands on a lower portion of each aperture corresponding to the height of aperture 8. The shafts 3 are fitted within each elongated aperture aperture 7 so that each shaft can be moved in a generally vertical direction along the longitudinal axis of the each aperture and its movement is not restricted by the fibrous strands. When the plates 9 are fitted to the housing, as shown in figure 1, elongated apertures 7, 10 sealed with fibrous strands extend over the horizontal apertures 8.

In an alternative arrangement of the invention, horizontal apertures 8 may also be provided with fibrous strands. In such a case, plates 9 may be shorter than those shown in figures 1, 2, 2a and 2b and only extend as far as the lower edge of aperture 8. Fibrous strands extending in a substantially vertical direction can be provided along the upper and lower edges of the aperture 8 providing cover over aperture 8.

## Claims

1. A compression roll housing (1) for an agricultural machine, said housing having a side panel (1a) provided with at least one elongated aperture (7) for receiving a shaft (3) of a compression roll (2), said aperture allowing movement of the shaft within the aperture along its longitudinal axis, wherein the at least one elongated aperture (7) is provided with fibrous strands (4) to prevent the escape of any material from the housing, **characterised in that** said housing further comprises a removable protection plate (9), wherein said plate is provided with at least one further elongated aperture (10), and said further elongated aperture is provided with fibrous strands (4).

2. A compression roll housing as claimed in claim 1 wherein the fibrous strands (4) extend across the aperture (7) transverse to the longitudinal axis.

3. A compression roll housing as claimed in claim 1 or claim 2 wherein two opposing sides of the aperture (7) are provided with fibrous strands (4) which extend across the aperture and meet along the longitudinal axis.

4. A compression roll housing as claimed in claim 1 wherein the housing side panel (1a) and the protection plate (9) are aligned to form at least one elongated aperture (7, 10) covered by fibrous strands (4).

5. A compression roll housing as claimed in claim 1 or claim 4 wherein the lower part of the at least one further elongated aperture (10) is provided with fibrous strands (4).

6. A compression roll housing as claimed in any preceding claim wherein the fibrous strands (4) are bristles.

7. A compression roll housing (1) as claimed in any preceding claim for a forage harvester.

## Patentansprüche

1. Kompressionswalzengehäuse (1) für eine landwirtschaftliche Maschine oder ein landwirtschaftliches Fahrzeug, wobei das Gehäuse ein Seiten-Paneel oder eine Seiten-Wandung (1a) besitzt, das oder die mit zumindest einer länglichen Öffnung (7) ausgestattet ist zur Aufnahme einer Welle (3) einer Kompressionswalze (2), wobei die Öffnung eine Bewegung der Welle in der Öffnung entlang ihrer Längsachse ermöglicht und die zumindest eine längliche Öffnung (7) mit fadenförmigen oder faserförmigen Strängen, Strähnen, Fäden oder Fasern ausgestattet ist zur Vermeidung des Austritts jedweden Materials aus dem Gehäuse, **dadurch gekennzeichnet, dass das** Gehäuse eine lösbare oder entfernbare Schutzplatte (9) besitzt, wobei die Schutzplatte mit zumindest einer weiteren länglichen Öffnung (10) ausgestattet ist und die weitere länglichen Öffnung mit fadenförmigen oder faserförmigen Strängen, Strähnen, Fäden oder Fasern ausgestattet ist.

2. Kompressionswalzengehäuse nach Anspruch 1 **dadurch gekennzeichnet, dass** sich die fadenförmigen oder faserförmigen Stränge, Strähnen, Fäden oder Fasern (4) quer zu der Längsachse über die Öffnung (7) erstrecken.

3. Kompressionswalzengehäuse nach Anspruch 1 oder 2, **dadurch gekennzeichnet,** das zwei gegenüberliegende Seiten der Öffnung (7) mit fadenförmigen oder faserförmigen Strängen, Strähnen, Fäden oder Fasern (4) ausgestattet sind, die sich über die Öffnung erstrecken und entlang der Längsachse treffen oder entlang der Längsachse aneinander anliegen.

4. Kompressionswalzengehäuse nach Anspruch 1, **dadurch gekennzeichnet, dass** das Seiten-Paneel oder die Seiten-Wandung (1a) des Gehäuses und die Schutzplatte (9) zueinander so ausgerichtet sind, dass diese zumindest eine längliche Öffnung (7, 10) bilden, die durch fadenförmige oder faserförmige Strängen, Strähnen, Fäden oder Fasern (4) abgedeckt ist.

5. Kompressionswalzengehäuse nach Anspruch 1 oder Anspruch 4, **dadurch gekennzeichnet, dass** der untere Teil der zumindest einen weiteren länglichen Öffnung (10) mit fadenförmigen oder faserförmigen Strängen, Strähnen, Fäden oder Fasern (4) ausgestattet ist.

6. Kompressionswalzengehäuse nach einem der vorhergehenden Ansprüche, **dadurch gekennzeichnet, dass** die fadenförmigen oder faserförmigen Strängen, Strähnen, Fäden oder Fasern (4) Bürsten oder Borsten sind.

7. Kompressionswalzengehäuse (1) nach einem der vorhergehenden Ansprüche für eine Futtererntemaschine, einen Feldhäcksler oder einen Feldschneider.

## Revendications

1. Logement de rouleaux de compression (1) destiné à une machine agricole, ledit logement comprenant un panneau latéral (1a) comportant au moins une ouverture allongée (7) destinée à recevoir un arbre (3) d'un rouleau de compression (2), ladite ouverture permettant le déplacement de l'arbre à l'intérieur de l'ouverture le long de son axe longitudinal, dans lequel la ou les ouvertures allongées (7) comportent des rebords fibreux (4) destinés à empêcher la fuite de matériaux quelconques du logement, **caractérisé en ce que** ledit logement comprend, en outre, une plaque de protection amovible (9), dans lequel ladite plaque comporte au moins une autre ouverture allongée (10), et ladite autre ouverture allongée comporte des rebords fibreux (4).

2. Logement de rouleaux de compression selon la revendication 1 dans lequel les rebords fibreux (4) s'étendent à travers l'ouverture (7) transversalement à l'axe longitudinal.

3. Logement de rouleaux de compression selon la revendication 1 ou 2 dans lequel les deux côtés opposés de l'ouverture (7) comportent des rebords fibreux (4) qui s'étendent à travers l'ouverture et se rejoignent le long de l'axe longitudinal.

4. Logement de rouleaux de compression selon la revendication 1, dans lequel le panneau latéral de logement (1a) et la plaque de protection (9) sont alignés afin de former au moins une ouverture allongée (7, 10) recouverte de rebords fibreux (4).

5. Logement de rouleaux de compression selon la revendication 1 ou 4, dans lequel la partie inférieure de la ou des autres ouvertures allongées (10) comporte des rebords fibreux (4).

6. Logement de rouleaux de compression selon l'une quelconque des revendications précédentes, dans lequel les rebords fibreux (4) sont des brosses.

7. Logement de rouleaux de compression (1) selon l'une quelconque des revendications précédentes pour une moissonneuse de fourrage.
